# EUROPEAN PATENT APPLICATION

(11) **EP 2 846 111 A1**
(43) Date of publication of application: **11.03.2015**
(21) Application number: 12875269.8
(22) Date of filing: 25.04.2012
(51) Int. Cl.: F25B 1/00, F25B 7/00

(54) **AIR-CONDITIONING/HOT-WATER SUPPLY SYSTEM**

(71) Applicant: Hitachi, Ltd., Tokyo 100-8280 (JP)
(72) Inventor: KOTANI, Masanao, Chiyoda-ku Tokyo 100-8280 (JP); KOKUGAN, Yoko, Chiyoda-ku Tokyo 100-8280 (JP)
(74) Representative: MERH-IP Matias Erny Reichl Hoffmann
(86) International application number: PCT/JP2012/061011
(87) International publication number: WO 2013/161011

(57) **Abstract**

Provided is an air-conditioning/hot-water supply system having high operational efficiency. An internal heat exchanger (15) has: a primary heat transfer pipe (15a) for forming a part of the annular circuit of a refrigerant circuit (10) for air conditioning; and a secondary heat transfer pipe (15b) connected to piping (P) branched from the annular circuit through a pressure reduction device (16). The pressure reduction device (16) reduces the pressure of a first refrigerant flowing therein from the piping (P) depending on an operation mode and causes the first refrigerant, the pressure of which has been reduced, to flow toward the secondary heat transfer pipe (15b), thereby cooling the first refrigerant flowing through the primary heat transfer pipe (15a).

## Description

### Technical Field

The present invention relates to an air-conditioning/hot-water supply system which performs air conditioning and supplies hot water.

### Background Art

For example, Patent Literature 1 discloses a technique of an air-conditioning/hot-water supply system which performs air conditioning and supplies hot water. Specifically, Patent Literature 1 discloses a complex system for air conditioning and hot-water supply, in which an indoor unit and a circuit for a hot-water heat source are connected in parallel, and the indoor unit and the heat source are connected through a branch unit and at least two connection pipes.

According to the technique disclosed in Patent Literature 1, the primary side (the side of the heat exchanger for air conditioning) of a refrigerant-refrigerant heat exchanger (intermediate heat exchanger) is used as a condenser, and the secondary side (the hot-water heat exchanger side) is used as an evaporator in such a manner that exhaust heat in a heat source for air conditioning and a hot-water heat source is mutually utilized.

### Citation List

### Patent Literature

Patent Literature 1: Japanese Patent Laid-open No. 2010-236817

### Summary of Invention

### Technical Problem

However, according to the technique disclosed in Patent Literature 1, the indoor unit and the refrigerant-refrigerant heat exchanger (the intermediate heat exchanger) are connected in parallel. Therefore, even when the hot-water supply cycle is not in operation, the refrigerant flowing through the refrigerant-refrigerant heat exchanger comes into thermal contact with external air. Consequently, in some cases, a load in excess of the air-conditioning load (the thermal load accompanied by air conditioning operation) is imposed on the complex system for air conditioning and hot-water supply.

For example, in the case where a heating operation is performed in the air-conditioning cycle and the hot-water supply cycle is not in operation (i.e., no hot-water supply load exists), the temperature of the refrigerant flowing through the refrigerant-refrigerant heat exchanger becomes as high as the temperature of the indoor unit. This is because the refrigerant-refrigerant heat exchanger is connected in parallel with the indoor unit.

On the other hand, the hot-water supply unit is normally placed in a non-air conditioned indoor or outdoor space. Therefore, the temperature of the refrigerant-refrigerant heat exchanger as a constituent element of the hot-water supply cycle is near the outdoor temperature, which is the ambient temperature of the hot-water supply unit.

As a result, when a heating operation is performed, heat is dissipated, in the above refrigerant-refrigerant heat exchanger, from the high-temperature refrigerant to the low-temperature outdoor air.

Consequently, according to the technique disclosed in Patent Literature 1, heat dissipation from the refrigerant to the outdoor air occurs in the refrigerant-refrigerant heat exchanger, in addition to the occurrence of the load necessary for the air conditioning operation. Since the dissipated heat is utilized for neither of comfort improvement in the indoor space and hot-water supply, the total system efficiency deteriorates.

In view of above, the object of the present invention is to provide an air-conditioning/hot-water supply system realizing high energetic efficiency.

### Solution to Problem

In order to solve the above problems, according to the present invention, an inside heat exchanger includes a primary-side heat transfer pipe constituting a portion of a loop circuit provided in a refrigerant circuit for air conditioning, and a secondary-side heat transfer pipe connected to a pipe arrangement which branches off from the loop circuit through a decompression device; and the decompression device cools a first refrigerant flowing through the primary-side heat transfer pipe, according to an operation mode, by causing pressure reduction of the first refrigerant flowing in from the pipe arrangement and delivering the first refrigerant having reduced pressure toward the secondary-side heat transfer pipe.

### Effect of Invention

According to the present invention, it is possible to provide an air-conditioning/hot-water supply system realizing high energetic efficiency.

### Brief Description of Drawings

FIG. 1 is a system diagram of an air-conditioning/hot-water supply system according to a first embodiment of the present embodiment.
FIG. 2 is a system diagram indicating flows of refrigerants and a heated fluid in a hot-water-supply operation mode.
FIG. 3 is a system diagram indicating flows of a refrigerant in a cooling operation (normal) mode.
FIG. 4 is a system diagram indicating flows of the refrigerants and the heated fluid in a cooling operation (exhaust heat) mode.
FIG. 5 is a graph of a pressure-specific enthalpy relationship, which indicates the condition of the refrigerant during a cooling operation.
FIG. 6 is a system diagram indicating flows of the refrigerant in a heating operation (normal) mode.
FIG. 7 is a graph of a pressure-specific enthalpy relationship, which indicates the condition of the refrigerant in the heating operation (normal) mode.
FIG. 8 is a system diagram indicating flows of the refrigerants and the heated fluid in a heating operation (exhaust heat) mode.
FIG. 9 is a graph of a pressure-specific enthalpy relationship, which indicates the condition of the refrigerant in the heating operation (exhaust heat) mode.
FIG. 10 is a system diagram indicating flows of refrigerants and a heated fluid in a hot-water-supply operation mode in an air-conditioning/hot-water supply system according to a second embodiment of the present invention.
FIG. 11 is a graph of a pressure-specific enthalpy relationship, which indicates the condition of a refrigerant during a heating operation in an air-conditioning/hot-water supply system according to a conventional technique.

### Description of Embodiments

Hereinbelow, embodiments of the present invention are explained with reference to drawings when necessary. In the drawings, identical or equivalent elements bear identical reference numbers, and the same explanations are not repeated.

### <<Air-conditioning/Hot-water Supply System>>

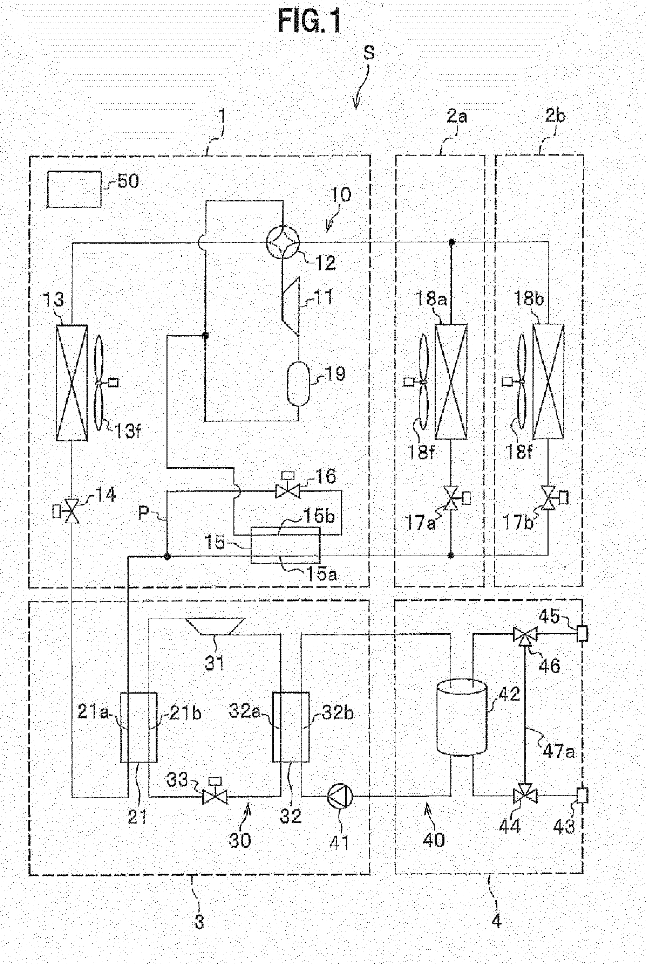

FIG. 1 is a system diagram of an air-conditioning/hot-water supply system according to the first embodiment of the present embodiment. As illustrated in FIG. 1, the air-conditioning/hot-water supply system S includes an outdoor unit 1, indoor units 2a and 2b, a hot-water supply unit 3, a hot-water storage tank 4, and a control device 50.

The indoor units 2a and 2b are placed indoors (in an air-conditioned space), and the outdoor unit 1, the hot-water supply unit 3, and the hot-water storage tank 4 are placed outdoors (outside the air-conditioned space). In the example of FIG. 1, the air-conditioning/hot-water supply system S is provided with the two indoor units.

In addition, the indoor units 2a and 2b and the outdoor unit 1 each have a control unit (not shown), and are arranged to be able to communicate with each other through communication lines (not shown). In FIG. 1, each control unit is schematically illustrated as the control device 50.

The air-conditioning/hot-water supply system S has the functions of performing a "cooling operation", a "heating operation", a "hot-water supply operation", a "cooling and hot-water supply operation", and a "heating and hot-water supply operation". The "cooling operation" cools the indoor space in which the indoor units 2a and 2b are placed. The "heating operation" warms the indoor space in which the indoor units 2a and 2b are placed. The hot-water supply operation" heats a fluid (e.g., water) to be heated, and supplies the heated fluid having high temperature to a tank 42. The "cooling and hot-water supply operation" includes the cooling operation and the hot-water supply operation. The "heating and hot-water supply operation" includes the heating operation and the hot-water supply operation.

In addition, the air-conditioning/hot-water supply system S is provided with an air-conditioning refrigerant circuit 10, a hot-water-supply refrigerant circuit 30, and a hot-water supply circuit 40. A first refrigerant circulates through the air-conditioning refrigerant circuit 10, a second refrigerant circulates through the hot-water-supply refrigerant circuit 30, and the heated fluid flows through the hot-water supply circuit 40.

### <Air-conditioning Refrigerant Circuit>

Hereinafter, the indoor units 2a and 2b, which are connected in parallel with the outdoor unit 1, may be collectively referred to as "the indoor units 2".

The air-conditioning refrigerant circuit 10 includes a loop circuit in which a compressor 11 for air conditioning, a four-way valve 12, an outdoor heat exchanger 13, an outdoor expansion valve 14, a primary-side heat transfer pipe 21a in an intermediate heat exchanger 21, a primary-side heat transfer pipe 15a in an inside heat exchanger 15, and the indoor units 2 arc connected in order. In addition, an accumulator 19, which performs vapor-liquid separation of the first refrigerant for prevention of liquid compression in the compressor 11 for air conditioning, is arranged on the intake side of the compressor 11 for air conditioning. Further, an expansion valve 16 for the inside heat exchanger is arranged to reduce the pressure of the first refrigerant before the first refrigerant flows into the secondary side of the inside heat exchanger 15.

The compressor 11 for air conditioning is a compressor which compresses the first refrigerant so as to make the temperature and the pressure of the first refrigerant high. For example, the rotary type, scroll type, or reciprocating type compressor may be used as the compressor 11 for air conditioning.

The four-way valve 12 switches the directions of the first refrigerant flowing through indoor heat exchangers 18a and 18b according to whether to perform cooling operation or heating operation. Specifically, the four-way valve 12 is switched such that the first refrigerant which is expanded by air-conditioning expansion valves 17a and 17b and has low temperature and low pressure flows into the indoor heat exchangers 18a and 18b during cooling operation, and the first refrigerant which is compressed by the compressor 11 for air conditioning and has high temperature and high pressure flows into the indoor heat exchangers 18a and 18b during heating operation.

The outdoor heat exchanger 13 (i.e., the air-conditioning heat-source side heat exchanger) is a heat exchanger which is connected to the discharge side of the compressor 11 for air conditioning through the four-way valve 12, and exchanges heat between the first refrigerant and the air (the outdoor air) sent from an outdoor fan 13 f.

The outdoor expansion valve 14 (corresponding to the first expansion valve) is interposed between the outdoor heat exchanger 13 and the intermediate heat exchanger 21, and functions as a decompression device which reduces the pressure of the first refrigerant in the hot-water-supply operation mode and the heating operation mode.

The intermediate heat exchanger 21 is a heat exchanger which exchanges heat between the first refrigerant flowing through the primary-side heat transfer pipe 21 a and the second refrigerant flowing through a secondary-side heat transfer pipe 21b.

The inside heat exchanger 15 is a heat exchanger which exchanges heat between the first refrigerant flowing through the primary side (the side connected to the indoor expansion valves 17a and 17b) and the first refrigerant flowing through the secondary side (the side connected to the expansion valve 16 for the inside heat exchanger).

Specifically, the inside heat exchanger 15 includes the primary-side heat transfer pipe 15a and a secondary-side heat transfer pipe 15b. The primary-side heat transfer pipe 15a constitutes a portion of the aforementioned loop circuit, and the secondary-side heat transfer pipe 15b is connected, through the expansion valve 16 for the inside heat exchanger, to a pipe arrangement P which branches off from the loop circuit.

Further, one end of the secondary-side heat transfer pipe 15b in the inside heat exchanger 15 is connected to the expansion valve 16 for the inside heat exchanger, and the other end of the secondary-side heat transfer pipe 15b is connected to a pipe arrangement connecting the four-way valve 12 and the accumulator 19.

The expansion valve 16 (corresponding to the decompression device) for the inside heat exchanger reduces the pressure of the first refrigerant flowing in from the pipe arrangement P according to the operation mode, and delivers the first refrigerant having the reduced pressure to the secondary-side heat transfer pipe 15b in the inside heat exchanger 15. Thus, the first refrigerant flowing through the primary-side heat transfer pipe 15a in the inside heat exchanger 15 is cooled.

The indoor expansion valves 17a and 17b (corresponding to the second expansion valve) function as decompression devices which are interposed between the inside heat exchanger 15 and the indoor heat exchangers 18a and 18b, and reduce the pressure of the first refrigerant in the cooling operation mode and the heating operation mode.

The indoor heat exchangers 18a and 18b (corresponding to the air-conditioned side heat exchanger) are heat exchangers which are connected through the four-way valve 12 to the discharge side of the compressor 11 for air conditioning, and exchange heat between the first refrigerant and the air (the indoor air) sent from indoor fans 18f.

As illustrated in FIG. 1, the indoor expansion valve 17a and the indoor heat exchanger 18a constituting the indoor unit 2a are connected in series, and the indoor expansion valve 17b and the indoor heat exchanger 18b constituting the indoor unit 2b are connected in series. In addition, the indoor units 2a and 2b arc connected in parallel. Hereinafter, the indoor expansion valves 17a and 17b may be collectively referred to as the indoor expansion valves 17, and the indoor heat exchangers 18a and 18b may be collectively referred to as the indoor heat exchangers 18.

For example, HFC, HFO-1234yf, HFO-1234ze, a natural refrigerant (e.g., CO₂ refrigerant), and other refrigerants can be used as the first refrigerant.

### <Hot-water Supply Refrigerant Circuit>

In the hot-water-supply refrigerant circuit 30 arranged in the hot-water supply unit 3, a compressor 31 for hot-water supply, a primary-side heat transfer pipe 32a in a heat exchanger 32 for hot-water supply, an expansion valve 33 for hot-water supply, and the secondary-side heat transfer pipe 21b in the intermediate heat exchanger 21 are connected with a pipe arrangement to form a loop.

The compressor 31 for hot-water supply is a compressor which compresses the second refrigerant to make the temperature and the pressure of the second refrigerant high.

The heat exchanger 32 for hot-water supply is a heat exchanger which exchanges heat between the second refrigerant flowing through the primary-side heat transfer pipe 32a and the heated fluid flowing through the secondary-side heat transfer pipe 32b.

The expansion valve 33 for hot-water supply functions as a decompression device which reduces the pressure of the second refrigerant.

For example, HFC, HFO-1234yf, HFO-1234ze, a natural refrigerant (e.g., CO₂ refrigerant), and other refrigerants can be used as the second refrigerant. In addition, it is preferable to use as the second refrigerant a refrigerant having a critical point (in the temperature-pressure relationship) higher than the critical point of the first refrigerant.

### <Hot-water Supply Circuit>

The hot-water supply circuit 40 is constituted by connecting, with a pipe arrangement, a pump 41 for hot-water supply, a secondary-side heat transfer pipe 32b in the heat exchanger 32 for hot-water supply, and the tank 42 so as to form a loop.

The pump 41 for hot-water supply pumps up the heated fluid from the tank 42, and transfers the heated fluid to the secondary-side heat transfer pipe 32b in the heat exchanger 32 for hot-water supply.

The tank 42 reserves the heated fluid, and is covered with a heat insulating material (not shown). As mentioned before the heated fluid may be, for example, water.

The hot-water storage tank 4 is provided with a splicing fitting 43 for water feed, a splicing fitting 45 for hot-water supply, and three-way valves 44 and 46.

One end of the splicing fitting 43 for water feed is connected to the three-way valve 44, and the other end of the splicing fitting 43 for water feed is connected to a water-supply terminal (not shown). The splicing fitting 43 for water feed is arranged such that the pressure from the water supply source causes the fluid (water) to be heated to flow into a lower portion of the tank 42 through the splicing fitting 43 for water feed when a user manipulates a hot-water supply terminal to be opened.

The three-way valves 44 and 46 are configured to allow adjustment of the proportions of the flow rate of the heated fluid through the three-way valves 44 and 46, and connected to each other through the pipe arrangement 47a. The three-way valves 44 and 46 are configured such that the high-temperature heated fluid supplied from the tank 42 is adjusted at an appropriate temperature by causing the fluid to be heated (water) to flow in through the pipe arrangement 47a at a flow rate corresponding to the apertures of the three-way valves 44 and 46.

One end of the splicing fitting 45 for hot-water supply is connected to the three-way valve 46, and the other end of the splicing fitting 45 for hot-water supply is connected to the hot-water supply terminal (not shown). The splicing fitting 45 for hot-water supply is configured such that the heated fluid (hot water) is supplied to the hot-water supply terminal through the splicing fitting 45 for hot-water supply when the user manipulates the hot-water supply terminal to be opened.

### <Control Device 50>

The air-conditioning/hot-water supply system S is provided with the control device 50. The control device 50 has the functions of determining the operation mode of the air-conditioning/hot-water supply system, and controlling various types of operations of the air-conditioning/hot-water supply system S by controlling, on the basis of the determined operation mode, the states (apertures) of the respective valves (the four-way valve 12, the outdoor expansion valve 14, the expansion valve 16 for the inside heat exchanger, the indoor expansion valves 17, and the expansion valve 33 for hot-water supply), the rotational speeds of the compressors (the compressor 11 for air conditioning and the compressor 31 for hot-water supply), the rotational speeds of the fans in the respective heat exchangers (the outdoor fan 13f and the indoor fans 18f), and the rotational speed of the pump 41 for hot-water supply.

### (Control in Each Operational Mode)

The respective operation modes of the air-conditioning/hot-water supply system S are explained below.

In the respective system diagrams which are hereinafter referred to, the pipe arrangement through which each of the first refrigerant, the second refrigerant, and the heated fluid flows is illustrated by bold lines, and the directions of the flows are indicated by arrows. In addition, each of the valves (the outdoor expansion valve 14, the expansion valve 16 for the inside heat exchanger, the indoor expansion valves 17, and the expansion valve 33 for hot-water supply) which is closed is illustrated by a filled symbol.

### (1. Hot-water-supply Operation Mode)

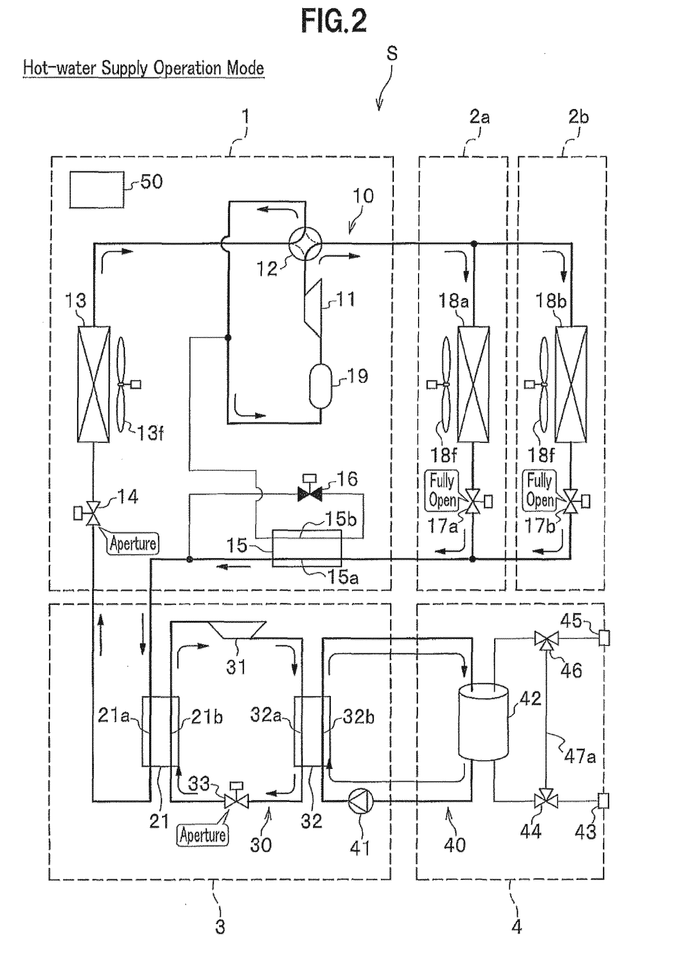

FIG. 2 is a system diagram indicating flows of refrigerants and the heated fluid in the hot-water-supply operation mode. In this mode, the indoor fans 18f are stopped.

The control device 50 controls a switch means (not shown) in the four-way valve 12 so as to position the switch means for the hot-water supply operation. In addition, the control device 50 controls the switch means (not shown) in the four-way valve 12 such that the discharge side of the compressor 11 for air conditioning and the indoor heat exchangers 18 are connected and the accumulator 19 and the outdoor heat exchanger 13 are connected. In addition, the control device 50 completely closes the expansion valve 16 for the inside heat exchanger, fully opens the indoor expansion valves 17, and controls the aperture of the outdoor expansion valve 14. Further, the control device 50 controls the rotational speeds of the compressor 11 for air conditioning, the compressor 31 for hot-water supply, and the outdoor fan 13f.

The air-conditioning refrigerant circuit 10 in the hot-water-supply operation mode is explained below.

The first refrigerant which is delivered from the compressor 11 for air conditioning and has high temperature and high pressure passes through the four-way valve 12, the indoor heat exchangers 18, the indoor expansion valves 17, and the primary-side heat transfer pipe 15a in the inside heat exchanger 15, and flows into the primary-side heat transfer pipe 21a in the intermediate heat exchanger 21, which functions as a condenser. In the hot-water-supply operation mode, the indoor fans 18f are stopped. Therefore, almost no heat exchange occurs between the indoor air and the first refrigerant flowing through the indoor heat exchangers 18.

Heat in the first refrigerant which flows through the primary-side heat transfer pipe 21 a in the intermediate heat exchanger 21 and has high temperature and high pressure is dissipated by heat exchange with the second refrigerant which flows through the secondary-side heat transfer pipe 21b in the intermediate heat exchanger 21, so that the above first refrigerant comes to have medium temperature and high pressure.

The first refrigerant which flows out of the primary-side heat transfer pipe 21a in the intermediate heat exchanger 21 and has medium temperature and high pressure comes to have low temperature and low pressure by pressure reduction in the outdoor expansion valve 14, and flows into the outdoor heat exchanger 13, which functions as an evaporator. The first refrigerant flowing through the outdoor heat exchanger 13 exchanges heat with the air (outdoor air) sent by the outdoor fan 13f, so that the first refrigerant flowing through the outdoor heat exchanger 13 takes (absorbs) heat from the outdoor air. Then, the first refrigerant having the absorbed heat flows from the outdoor heat exchanger 13 through the four-way valve 12 and the accumulator 19 back to the compressor 11 for air conditioning.

Next, the hot-water-supply refrigerant circuit 30 is explained below.

The second refrigerant which is delivered from the compressor 31 for hot-water supply and has high temperature and high pressure flows into the primary-side heat transfer pipe 32a in the heat exchanger 32 for hot-water supply, which functions as a condenser. Heat in the second refrigerant flowing through the primary-side heat transfer pipe 32a in the heat exchanger 32 for hot-water supply is dissipated by heat exchange with the heated fluid flowing through the secondary-side heat transfer pipe 32b, so that the above second refrigerant comes to have medium temperature and high pressure.

Then, the second refrigerant which flows out of the primary-side heat transfer pipe 32a in the heat exchanger 32 for hot-water supply and has medium temperature and high pressure comes to have low temperature and low pressure by pressure reduction in the expansion valve 33 for hot-water supply.

Subsequently, the second refrigerant having low temperature and low pressure flows into the secondary-side heat transfer pipe 21b in the intermediate heat exchanger 21, which functions as an evaporator. The second refrigerant flowing through the secondary-side heat transfer pipe 21b in the intermediate heat exchanger 21 takes (absorbs) heat from the first refrigerant having high temperature and high pressure and flowing through the primary-side heat transfer pipe 21a, by heat exchange with the first refrigerant. Further, the second refrigerant having the absorbed heat returns from the intermediate heat exchanger 21 to the compressor 31 for hot-water supply.

Next, the hot-water supply circuit 40 is explained below. The control device 50 controls the rotational speed of the pump 41 for hot-water supply. When the pump 41 is driven, the heated fluid which flows out of the lower portion of the tank 42 flows into the secondary-side heat transfer pipe 32b in the heat exchanger 32 for hot-water supply. The heated fluid flowing through the secondary-side heat transfer pipe 32b absorbs heat by heat exchange with the second refrigerant flowing through the primary-side heat transfer pipe 32a, so that the above heated fluid comes to have high temperature. Then, the heated fluid having the high temperature which flows out of the secondary-side heat transfer pipe 32b in the heat exchanger 32 is transferred by the pump 41 for hot-water supply to an upper portion of the tank 42, and reserved in the tank 42.

### (2. Cooling Operation (Normal) Mode)

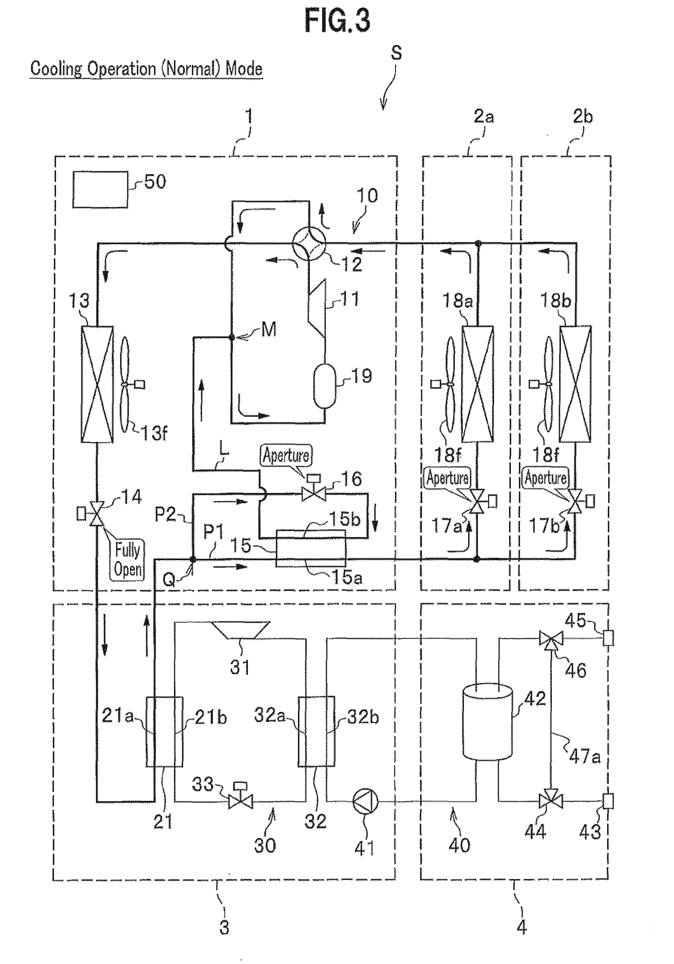

FIG. 3 is a system diagram indicating flows of a refrigerant in the cooling operation (normal) mode. In the cooling operation (normal) mode, the hot-water-supply refrigerant circuit 30 and the hot-water supply circuit 40 are stopped.

The control device 50 controls the switch means (not shown) in the four-way valve 12 so as to position the switch means for the cooling operation. In addition, the control device 50 controls the switch means (not shown) in the four-way valve 12 such that the discharge side of the compressor 11 for air conditioning and the outdoor heat exchanger 13 are connected and the accumulator 19 and the indoor heat exchangers 18 are connected.

In addition, the control device 50 fully opens the outdoor expansion valve 14, and controls the aperture of the expansion valve 16 for the inside heat exchanger such that the first refrigerant flows through the secondary-side heat transfer pipe 15b in the inside heat exchanger 15 at an appropriate flow rate. Further, the control device 50 controls the apertures of the indoor expansion valves 17 such that the first refrigerant flows through the indoor heat exchangers 18 at a flow rate corresponding to the air-conditioning load occurring in the indoor space (the air-conditioned space).

Furthermore, the control device 50 controls the rotational speeds of the compressor 11 for air conditioning, the indoor fans 18f, and the outdoor fan 13f.

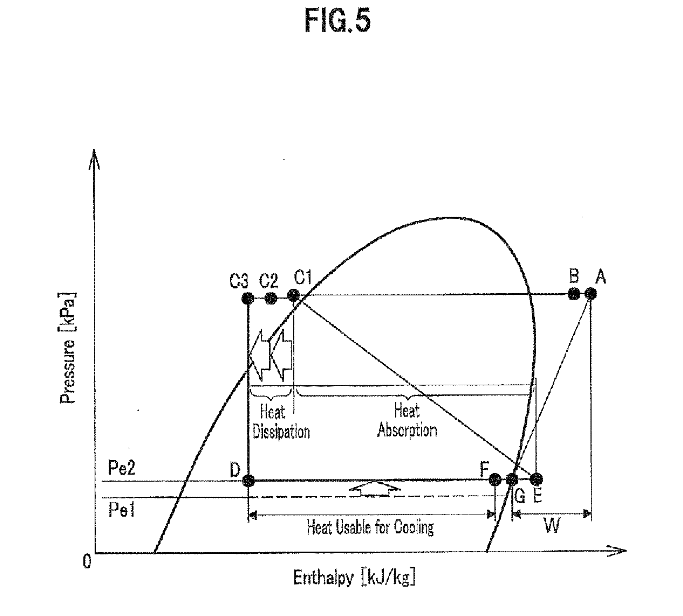

Hereinbelow, the condition of the first refrigerant flowing through the air-conditioning refrigerant circuit 10 is explained with reference to the graph of the pressure-specific enthalpy relationship indicated in FIG. 5.

In the graph of FIG. 5, the ordinate corresponds to the absolute pressure (kPa), and the abscissa corresponds to the specific enthalpy (kJ/kg). In addition, the first refrigerant is in a gas-liquid two-phase state in the region surrounded by the saturation liquid line and the saturation gas line, in a liquid state on the left side of the saturation liquid line, and in a gas state on the right side of the saturation gas line. This is similar in the other pressure-specific enthalpy relationships.

In the following explanations, the references A to F of the states indicated in FIG. 5 are indicated in parentheses. In addition, the enthalpy given by the compressor 11 for air conditioning is indicated by the reference W.

The first refrigerant being delivered from the outdoor heat exchanger 13 and having high temperature and high pressure (as indicated by A) flows through the four-way valve 12 into the outdoor heat exchanger 13, which functions as a condenser (as indicated by B). Then, the first refrigerant having high temperature and high pressure flows through the outdoor heat exchanger 13, and exchanges heat with the air (outdoor air) sent by the outdoor fan 13f, so that heat in the first refrigerant is dissipated (exhausted) to the air, and the above first refrigerant comes to have medium temperature and high pressure (as indicated by C1).

The first refrigerant which flows out of the outdoor heat exchanger 13 and has medium temperature and high pressure passes through the outdoor expansion valve 14, and flows into the primary-side heat transfer pipe 21 a in the intermediate heat exchanger 21. Since the ambient temperature of the intermediate heat exchanger 21 is near the outdoor temperature, the first refrigerant flowing through the primary-side heat transfer pipe 21a in the intermediate heat exchanger 21 exchanges heat with the outdoor air, so that heat in the first refrigerant is dissipated, i.e., the first refrigerant is cooled (as indicated by C2). Then, the first refrigerant which flows out of the intermediate heat exchanger 21 is branched at the branch point Q into the pipe arrangements P1 and P2. At this time, the aperture of the expansion valve 16 for the inside heat exchanger is controlled such that the flow rate of the first refrigerant branched into the pipe arrangement P2 is 3 to 5% of the flow rate of the first refrigerant flowing into the branch point Q.

Then, the first refrigerant which flows from the pipe arrangement P2 into the expansion valve 16 for the inside heat exchanger comes to have low temperature and low pressure by pressure reduction in the expansion valve 16, and flows into the secondary-side heat transfer pipe 15b in the inside heat exchanger 15. The first refrigerant flowing through the secondary-side heat transfer pipe 15b in the inside heat exchanger 15 absorbs heat (as indicated by E) by heat exchange with the first refrigerant flowing through the primary-side heat transfer pipe 15a and having medium temperature and high pressure, and then flows into a pipe arrangement L. The first refrigerant which flows into the pipe arrangement L merges with the first refrigerant flowing in from the indoor heat exchangers 18, and returns to the compressor 11 for air conditioning through the accumulator 19.

On the other hand, the first refrigerant having medium temperature and high pressure and flowing through the primary-side heat transfer pipe 15a in the inside heat exchanger 15 is further cooled (as indicated by C3) by heat exchange with the first refrigerant flowing through the secondary-side heat transfer pipe 15b and having low temperature and low pressure. Therefore, the enthalpy of the first refrigerant which flows out of the primary-side heat transfer pipe 15a can be reduced, so that the heat usable for cooling can be increased. Since the flow rate of the refrigerant through evaporators can be reduced and the pressure loss in the indoor heat exchangers 18, which function as the evaporators, can be reduced, the first refrigerant can be efficiently circulated in the air-conditioning refrigerant circuit 10.

Further, the first refrigerant which flows out of the primary-side heat transfer pipe 15a in the inside heat exchanger 15 comes to have low temperature and low pressure (as indicated by D) by pressure reduction in the indoor expansion valves 17, and flows into the indoor heat exchangers 18.

The first refrigerant flowing through the indoor heat exchangers 18 absorbs heat (as indicated by F) by heat exchange with the air (indoor air) sent from the indoor fans 18f, and then returns to the compressor 11 for air conditioning through the four-way valve 12 and the accumulator 19 (as indicated by G).

### (3. Cooling Operation (Exhaust heat) Mode)

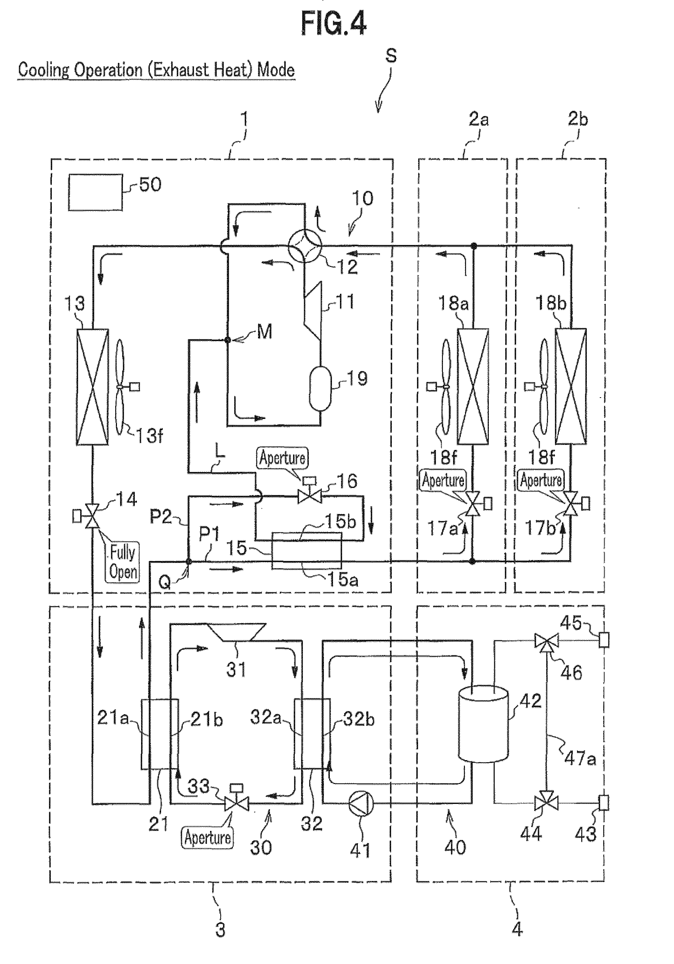

FIG. 4 is a system diagram indicating flows of the refrigerants and the heated fluid in the cooling operation (exhaust heat) mode.

The control device 50 controls a switch means (not shown) in the four-way valve 12 so as to position the switch means for the cooling operation. In addition, the control device 50 fully opens the outdoor expansion valve 14, and controls the aperture of the expansion valve 16 for the inside heat exchanger such that the first refrigerant flows through the secondary-side heat transfer pipe 15b in the inside heat exchanger 15 at an appropriate flow rate. In addition, the control device 50 controls the aperture of the indoor expansion valve such that the first refrigerant flows through the indoor heat exchangers 18 at a flow rate corresponding to the air-conditioning load occurring in the indoor space (the air-conditioned space). Further, the control device 50 controls the rotational speeds of the compressor 11 for air conditioning, the indoor fans 18f, and the outdoor fan 13f.

Furthermore, the control device 50 controls the aperture of the rotational speed of the compressor 31 for hot-water supply and the aperture of the expansion valve 33 for hot-water supply such that the refrigerant flows at a flow rate appropriate for the hot-water supply load. In addition, the control device 50 controls the rotational speed of the pump 41 for hot-water supply such that the heated fluid (water) flows through the hot-water supply circuit 40 at an appropriate circulation rate.

Hereinbelow, the operations of the air-conditioning refrigerant circuit 10 are explained with reference to FIGS. 4 and 5. Since the operations of the hot-water-supply refrigerant circuit 30 and the hot-water supply circuit 40 in the cooling operation (exhaust heat) mode are similar to the aforementioned operations in the hot-water supply operation mode explained before, explanations on the operations of the hot-water-supply refrigerant circuit 30 and the hot-water supply circuit 40 in the cooling operation (exhaust heat) mode are not presented.

The first refrigerant which is delivered from the compressor 11 for air conditioning and has high temperature and high pressure (as indicated by A) flows through the four-way valve 12 into the outdoor heat exchanger 13 (as indicated by B), where the outdoor heat exchanger 13 functions as a condenser. The first refrigerant having high temperature and high pressure and flowing through the outdoor heat exchanger 13 exchanges heat with the air (outdoor air) sent by the outdoor fan 13f, so that heat in the first refrigerant flowing through the outdoor heat exchanger 13 is dissipated (exhausted) to the air, and the above first refrigerant comes to have medium temperature and high pressure (as indicated by C1).

The first refrigerant which flows out of the outdoor heat exchanger 13 and has medium temperature and high pressure flows through the outdoor expansion valve 14 into the primary-side heat transfer pipe 21 a in the intermediate heat exchanger 21. Since the secondary-side heat transfer pipe 21b in the intermediate heat exchanger 21 functions as an evaporator, heat in the first refrigerant flowing through the primary-side heat transfer pipe 21a is dissipated to the second refrigerant flowing through the secondary-side heat transfer pipe 21b, i.e., the first refrigerant flowing through the primary-side heat transfer pipe 21 a is cooled (as indicated by C2). Therefore, the temperature of the first refrigerant which flows out of the primary-side heat transfer pipe 21 a can be lowered to a sufficiently low temperature.

Then, the first refrigerant which flows out of the intermediate heat exchanger 21 is branched at the branch point Q into the pipe arrangements P1 and P2.

Then, the first refrigerant which flows from the pipe arrangement P2 into the expansion valve 16 for the inside heat exchanger comes to have low temperature and low pressure by pressure reduction in the expansion valve 16, and then flows into the secondary-side heat transfer pipe 15b in the inside heat exchanger 15. The first refrigerant flowing through the secondary-side heat transfer pipe 15b in the inside heat exchanger 15 absorbs heat (as indicated by E) by heat exchange with the first refrigerant flowing through the primary-side heat transfer pipe 15a and having medium temperature and high pressure, and then flows into the pipe arrangement L. The first refrigerant which flows into the pipe arrangement L merges with the first refrigerant flowing in from the indoor heat exchangers 18, and then returns through the accumulator 19 to the compressor 11 for air conditioning.

On the other hand, the first refrigerant flowing through the primary-side heat transfer pipe 15a in the inside heat exchanger 15 is further cooled (as indicated by C3) by heat exchange with the first refrigerant flowing through the secondary-side heat transfer pipe 15b and having low temperature and low pressure. Then, the first refrigerant which flows out of the primary-side heat transfer pipe 15a in the inside heat exchanger 15 comes to have low temperature and low pressure (as indicated by D) by pressure reduction in the indoor expansion valves 17, and then flows into the indoor heat exchangers 18.

The first refrigerant flowing through the indoor heat exchangers 18 absorbs heat (indicated by F) from the air (indoor air) sent from the indoor fans 18f, by heat exchange with the air, and the first refrigerant having the absorbed heat returns through the four-way valve 12 and the accumulator 19 to the compressor 11 for air conditioning (as indicated by G).

As described above, the first refrigerant circulating in the air-conditioning refrigerant circuit 10 is cooled by the outdoor heat exchanger 13, and is further cooled by the intermediate heat exchanger 21 and the inside heat exchanger 15. Therefore, the enthalpy difference which can be utilized in the indoor heat exchangers 18, which function as evaporators, increases, so that the flow rate of the first refrigerant flowing through the indoor heat exchangers 18 can be reduced. Thus, the pressure loss occurring in the indoor heat exchangers 18 (functioning as the evaporators) is reduced, and therefore the efficiency in the air-conditioning refrigerant circuit 10 can be improved.

Since, in the cooling operation (exhaust heat) mode, the low-temperature exhaust heat in the hot-water-supply refrigerant circuit 30 can be utilized by the intermediate heat exchanger 21, the cooling rate in the intermediate heat exchanger 21 can be increased, compared with the cooling operation (normal) mode, which is explained before. Therefore, the efficiency in the air-conditioning refrigerant circuit 10 can be further improved.

### (4. Heating Operation (Normal) Mode)

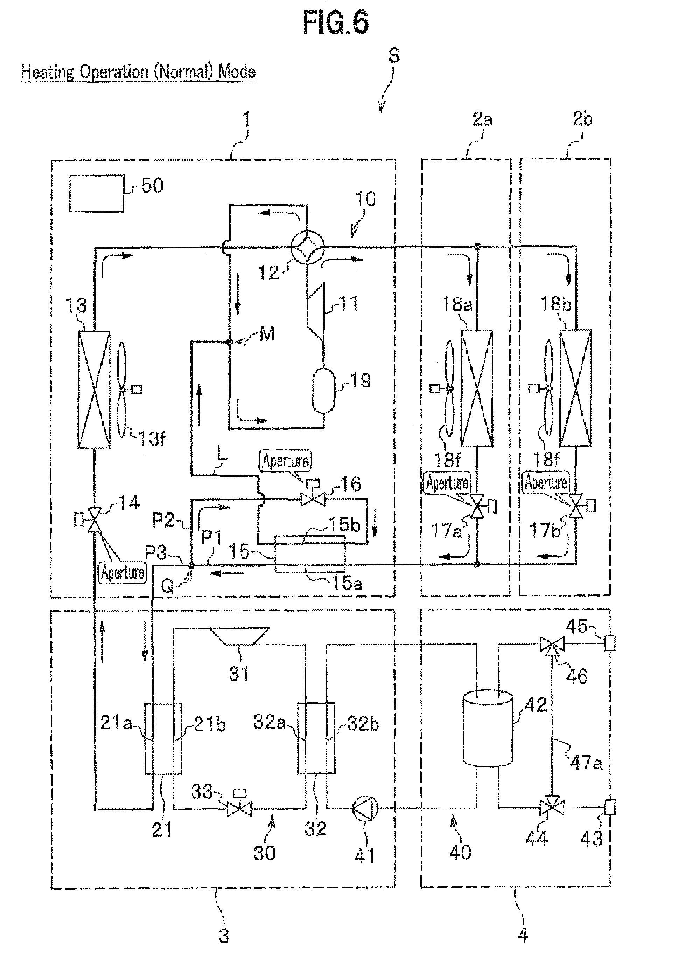

FIG. 6 is a system diagram indicating flows of the refrigerant in the heating operation (normal) mode. In the heating operation (normal) mode, the hot-water-supply refrigerant circuit 30 and the hot-water supply circuit 40 are stopped.

The control device 50 controls a switch means (not shown) in the four-way valve 12 so as to position the switch means for the heating operation. In addition, the control device 50 controls the switch means (not shown) in the four-way valve 12 such that the discharge side of the compressor 11 for air conditioning and the indoor heat exchangers 18 are connected and the intake side of the accumulator 19 and the outdoor heat exchanger 13 are connected.

In addition, the control device 50 controls the apertures of the indoor expansion valves 17 and the outdoor expansion valve 14 such that the first refrigerant circulates in the air-conditioning refrigerant circuit 10 at a flow rate corresponding to the air-conditioning load occurring in the indoor space (the air-conditioned space). In addition, the control device 50 controls the aperture of the expansion valve 16 for the inside heat exchanger such that the first refrigerant flows through the secondary-side heat transfer pipe 15b in the inside heat exchanger 15 at an appropriate flow rate.

Further, the control device 50 controls the rotational speeds of the compressor 11 for air conditioning, the indoor fans 18f, and the outdoor fan 13f.

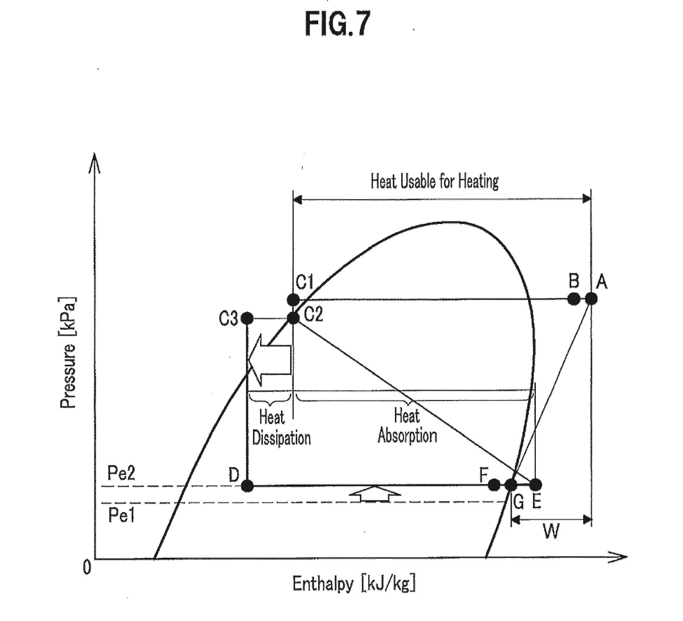

Hereinbelow, the operation of the air-conditioning refrigerant circuit 10 are explained with reference to FIGS. 6 and 7.

The first refrigerant which is delivered from the compressor 11 for air conditioning and has high temperature and high pressure (as indicated by A) flows through the four-way valve 12 into the indoor heat exchangers 18 (as indicated by B), where the indoor heat exchangers 18 function as condensers. The first refrigerant flowing through the indoor heat exchangers 18 and having high temperature and high pressure exchanges heat with the air (indoor air) sent by the indoor fans 18f, so that heat in the first refrigerant flowing through the indoor heat exchangers 18 is dissipated (exhausted) to the air and the above first refrigerant comes to have medium temperature and high pressure (as indicated by C1).

The first refrigerant which flows out of the outdoor heat exchanger 13 and has medium temperature and high pressure passes through the indoor expansion valves 17 (as indicated by C2), and flows into the primary-side heat transfer pipe 21a in the intermediate heat exchanger 21. At this time, the apertures of the indoor expansion valves 17 are almost fully open, so that almost no pressure reduction occurs in the indoor expansion valves 17. (See the transition from the state C1 to C2 indicated in FIG. 7.) Thus, it is possible to prevent transition of the first refrigerant flowing out of the indoor expansion valves 17 to a liquid-gas two-phase state, reduce the pressure loss occurring in the inside heat exchanger 15 and the intermediate heat exchanger 21, and suppress the temperature fall caused by the pressure loss.

After the first refrigerant passes through the indoor expansion valves 17, the first refrigerant flows into the primary-side heat transfer pipe 15a in the inside heat exchanger 15. The first refrigerant flowing through the primary-side heat transfer pipe 15a is cooled (as indicated by C3) by heat exchange with the first refrigerant flowing through the secondary-side heat transfer pipe 15b and having low temperature and low pressure. Resultantly, the temperature of the first refrigerant flowing through the primary-side heat transfer pipe 15a can be lowered to approximately the ambient temperature (outdoor temperature), so that heat exchange with the outdoor air in the intermediate heat exchanger 21 can be suppressed. Thus, it is possible to prevent imposition, on the air-conditioning refrigerant circuit 10, of a load exceeding the air-conditioning load, and efficiently operate the air-conditioning refrigerant circuit 10.

The first refrigerant which flows out of the inside heat exchanger 15 is branched at the branch point Q into the pipe arrangement P2 and the pipe arrangement P3. At this time, the aperture of the expansion valve 16 for the inside heat exchanger is controlled such that the flow rate of the first refrigerant branched into the pipe arrangement P2 is 3 to 5% of the flow rate of the first refrigerant flowing through the pipe arrangement P1.

The first refrigerant which flows into the expansion valve 16 for the inside heat exchanger comes to have low temperature and low pressure by pressure reduction in the expansion valve 16, and then flows into the secondary-side heat transfer pipe 15b in the inside heat exchanger 15. The first refrigerant flowing through the secondary-side heat transfer pipe 15b absorbs heat to be heated (as indicated by E) by heat exchange with the first refrigerant flowing through the primary-side heat transfer pipe 15a and having medium temperature and high pressure, and then flows into the pipe arrangement L.

As explained above, the heat dissipated from the first refrigerant flowing through the primary-side heat transfer pipe 15a in the inside heat exchanger 15 is absorbed by the first refrigerant flowing through the secondary-side heat transfer pipe 15b, so that the above heat can be retrieved within the air-conditioning refrigerant circuit 10.

In addition, the first refrigerant which flows into the pipe arrangement L merges with the first refrigerant which flows in from the outdoor heat exchanger 13, and then returns through the accumulator 19 to the compressor 11 for air conditioning.

On the other hand, the first refrigerant which flows out of the primary-side heat transfer pipe 15a in the inside heat exchanger 15 flows into the primary-side heat transfer pipe 21a in the intermediate heat exchanger 21. As mentioned before, the temperature of the first refrigerant flowing through the primary-side heat transfer pipe 21a can be lowered to approximately the ambient temperature (outdoor temperature), so that almost no heat exchange occurs in the intermediate heat exchanger 21.

Then, the first refrigerant which flows out of the intermediate heat exchanger 21 comes to have low temperature and low pressure (as indicated by D) by pressure reduction in the outdoor expansion valve 14, and then flows into the outdoor heat exchanger 13, which functions as an evaporator. The first refrigerant flowing through the outdoor heat exchanger 13 absorbs heat (as indicated by F) from the air (outdoor air) sent by the outdoor fan 13f, by heat exchange with the air, and then returns through the four-way valve 12 and the accumulator 19 to the compressor 11 for air conditioning (as indicated by G).

In the above operations, it is possible to reduce heat dissipation, occurring in the intermediate heat exchanger 21, to the outdoor air from the first refrigerant circulating in the air-conditioning refrigerant circuit 10, and prevent imposition of a load exceeding the air-conditioning load on the air-conditioning refrigerant circuit 10. Therefore, when heat is retrieved by the inside heat exchanger 15, the amount of heat absorption required in the evaporator (the outdoor heat exchanger 13) can be reduced. Thus, the evaporation pressure Pe2 in the evaporator can be increased compared with the evaporation pressure Pe1 in the case where no heat is retrieved, so that the efficiency in the air-conditioning refrigerant circuit 10 can be improved.

### (5. Heating Operation (Exhaust heat) Mode)

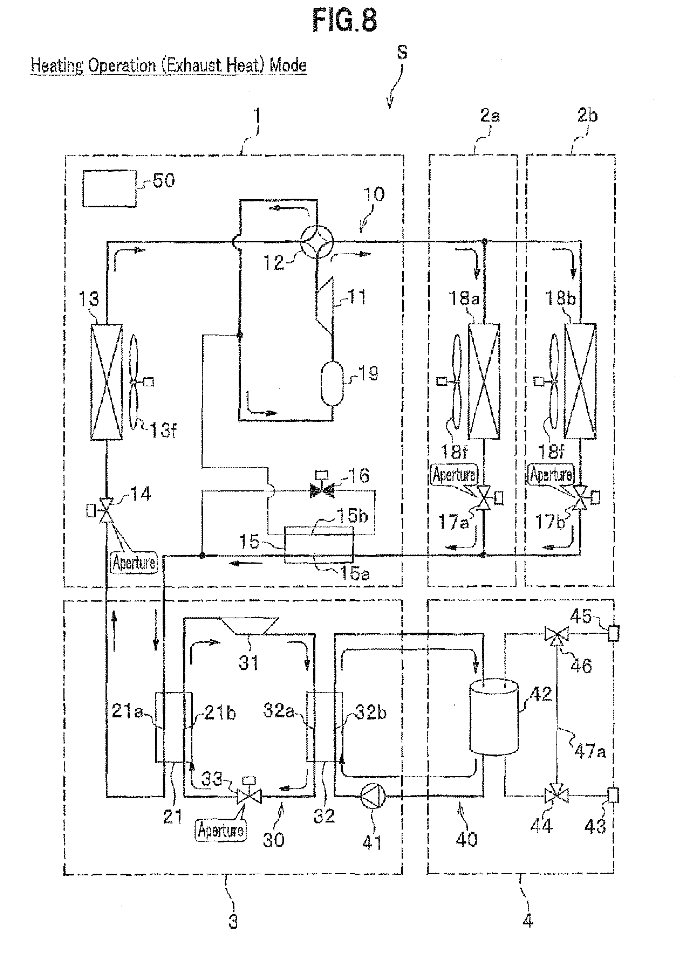

FIG. 8 is a system diagram indicating flows of the refrigerants and the heated fluid in the heating operation (exhaust heat) mode.

The control device 50 controls a switch means (not shown) in the four-way valve 12 so as to position the switch means for the heating operation. In addition, the control device 50 controls the apertures of the indoor expansion valves 17 and the outdoor expansion valve 14 such that the first refrigerant circulates in the air-conditioning refrigerant circuit 10 at a flow rate corresponding to the air-conditioning load occurring in the indoor space (the air-conditioned space). In addition, the control device 50 fully opens the expansion valve 16 for the inside heat exchanger. Thus, hot heat can be fed from the first refrigerant flowing through primary-side heat transfer pipe 21 a in the intermediate heat exchanger 21 to the second refrigerant flowing through the secondary-side heat transfer pipe 21b, so that the hot heat can be used as a heat source in the hot-water-supply refrigerant circuit 30.

Further, the control device 50 controls the rotational speeds of the compressor 11 for air conditioning, the indoor fans 18f, and the outdoor fan 13f.

The control device 50 controls the rotational speed of the compressor 31 for hot-water supply and the apertures of the expansion valve 33 for hot-water supply such that the refrigerant flows at a flow rate appropriate for the hot-water supply load. In addition, the control device 50 controls the rotational speed of the pump 41 for hot-water supply such that the heated fluid (water) circulates in the hot-water supply circuit 40 at an appropriate flow rate.

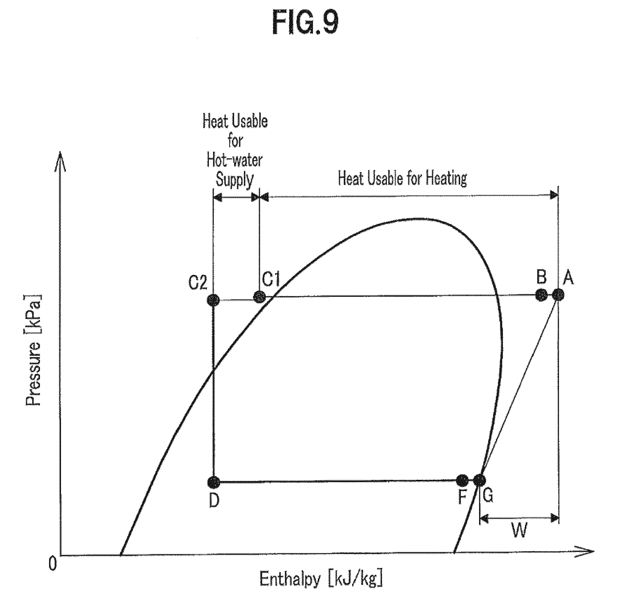

Hereinbelow, the operations of the air-conditioning refrigerant circuit 10 are explained with reference to FIGS. 8 and 9. Since the operations of the hot-water-supply refrigerant circuit 30 and the hot-water supply circuit 40 in the heating operation (exhaust heat) mode are similar to the operations in the hot-water-supply operation mode explained before, explanations on the operations of the hot-water-supply refrigerant circuit 30 and the hot-water supply circuit 40 in the heating operation (exhaust heat) mode are not presented.

The first refrigerant which is delivered from the compressor 11 for air conditioning and has high temperature and high pressure (as indicated by A) flows through the four-way valve 12 into the indoor heat exchangers 18 (as indicated by B), where the indoor heat exchangers 18 function as condensers. The first refrigerant flowing through the indoor heat exchangers 18 and having high temperature and high pressure exchanges heat with the air (indoor air) sent by the indoor fans 18f, so that heat in the first refrigerant flowing through the indoor heat exchangers 18 is dissipated (exhausted) to the air, and the above first refrigerant comes to have medium temperature and high pressure (as indicated by C1).

The first refrigerant which flows out of the outdoor heat exchanger 13 and has medium temperature and high pressure passes through the indoor expansion valves 17 and the primary-side heat transfer pipe 15a in the inside heat exchanger 15, and flows into the primary-side heat transfer pipe 21a in the intermediate heat exchanger 21. At this time, the indoor expansion valves 17 is almost fully open, so that almost no pressure reduction occurs in the indoor expansion valves.

In addition, the expansion valve 16 for the inside heat exchanger is fully open, so that no heat exchange occurs with the first refrigerant in the inside heat exchanger 15.

The first refrigerant flowing through the primary-side heat transfer pipe 21a in the intermediate heat exchanger 21 and having medium temperature and high pressure exchanges heat with the second refrigerant flowing through the secondary-side heat transfer pipe 21b in the intermediate heat exchanger 21, so that heat in the first refrigerant flowing through the primary-side heat transfer pipe 21a is dissipated (as indicated by C2). Subsequently, the first refrigerant which flows out of the intermediate heat exchanger 21 comes to have low temperature and low pressure by pressure reduction in the outdoor expansion valve 14 (as indicated by D), and then flows into the outdoor heat exchanger 13.

The first refrigerant flowing through the outdoor heat exchanger 13 absorbs heat (as indicated by E) from the air (outdoor air) sent by the outdoor fan 13f, by heat exchange with the air, and returns through the four-way valve 12 and the accumulator 19 to the compressor 11 for air conditioning (as indicated by F).

### <Advantageous Effect>

In the air-conditioning/hot-water supply system S according to the present embodiment, during the cooling operation, the first refrigerant flowing through the primary-side heat transfer pipe 15a in the inside heat exchanger 15 is cooled by the first refrigerant flowing through the secondary-side heat transfer pipe 15b and having low temperature and low pressure. Therefore, the pressure loss in the indoor heat exchangers 18, which function as evaporators, can be reduced, and thus the total operational efficiency in the air-conditioning/hot-water supply system S can be improved.

In addition, in the heating operation (normal) mode, the first refrigerant is cooled in the inside heat exchanger 15 before the first refrigerant flows into the intermediate heat exchanger 21. Therefore, the heat dissipation to the outdoor air in the intermediate heat exchanger 21 can be reduced, and imposition, on the air-conditioning refrigerant circuit 10, of a load exceeding the air-conditioning load can be prevented. In addition, since the heat dissipated from the first refrigerant flowing through the primary-side heat transfer pipe 15a in the inside heat exchanger 15 is absorbed by the first refrigerant flowing through the secondary-side heat transfer pipe 15b, the heat dissipated from the first refrigerant flowing through the primary-side heat transfer pipe 15a can be retrieved within the air-conditioning refrigerant circuit 10.

As explained above, it is possible to suppress the surplus load occurring in the intermediate heat exchanger 21 even when the refrigeration cycle on the hot-water supply side is not in operation, and improve the total efficiency in the air-conditioning/hot-water supply system S during each of cooling operation and heating operation.

Further, in the heating operation (exhaust heat) mode, heat exchange in the inside heat exchanger 15 is prevented by completely closing the expansion valve 16 for the inside heat exchanger, so that the first refrigerant having high temperature is caused to flow through the intermediate heat exchanger 21 and exchange heat with the second refrigerant. Therefore, the total efficiency in the air-conditioning/hot-water supply system S can be improved.

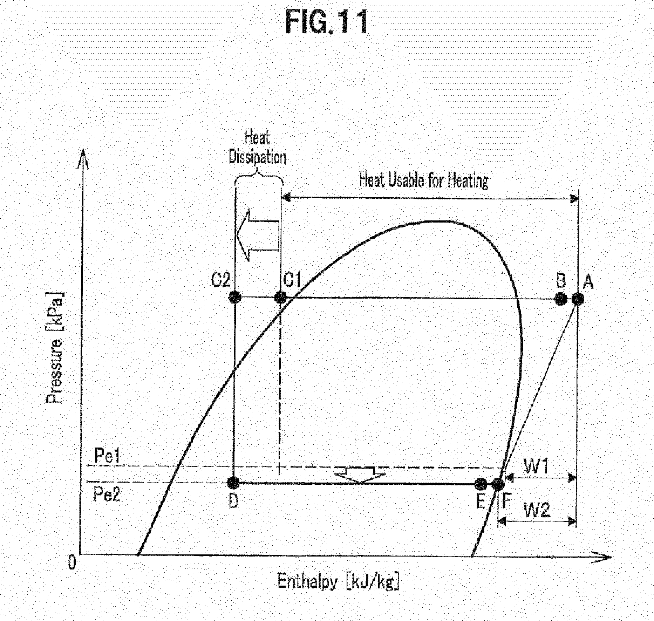

FIG. 11 is a graph of a pressure-specific enthalpy relationship, which indicates the condition of a refrigerant during a heating operation in an air-conditioning/hot-water supply system according to a conventional technique (for example, the technique disclosed in Patent Literature 1).

As indicated in FIG. 11, a first refrigerant delivered from a compressor for air conditioning (in the state indicated by A) flows into an indoor heat exchanger (as indicated by B). Subsequently, the first refrigerant exchanges heat with indoor air in the indoor heat exchanger (as indicated by C1), and then flows into an intermediate heat exchanger. As mentioned before, since the intermediate heat exchanger is normally arranged in an outdoor unit, the intermediate heat exchanger is in thermal contact with the outdoor air. Therefore, heat in the first refrigerant in the intermediate heat exchanger is dissipated to the outdoors (as indicated by C2). Thus, the amount of heating which is required in the outdoor heat exchanger, which functions as an evaporator, increases by the amount of the heat dissipation in the transition from the state C1 to the state C2 indicated in FIG. 11. Resultantly, the evaporation pressure of the first refrigerant is lowered from Pe1 to Pe2, and the work load in the compressor for air conditioning is lowered from W1 to W2. Consequently, the total efficiency in the air-conditioning/hot-water supply system is lowered.

In contrast, according to the present embodiment, as explained before, the total efficiency in the air-conditioning/hot-water supply system S can be improved in each of the cooling operation and the heating operation.

### «Second Embodiment»

The second embodiment is different from the first embodiment in that a bypass pipe arrangement U and two-way valves 61, 62, and 63 (the open-close means) are arranged, and is similar to the first embodiment in the other configuration. Therefore, only the differences are explained below, and explanations on the identical portions are not repeated.

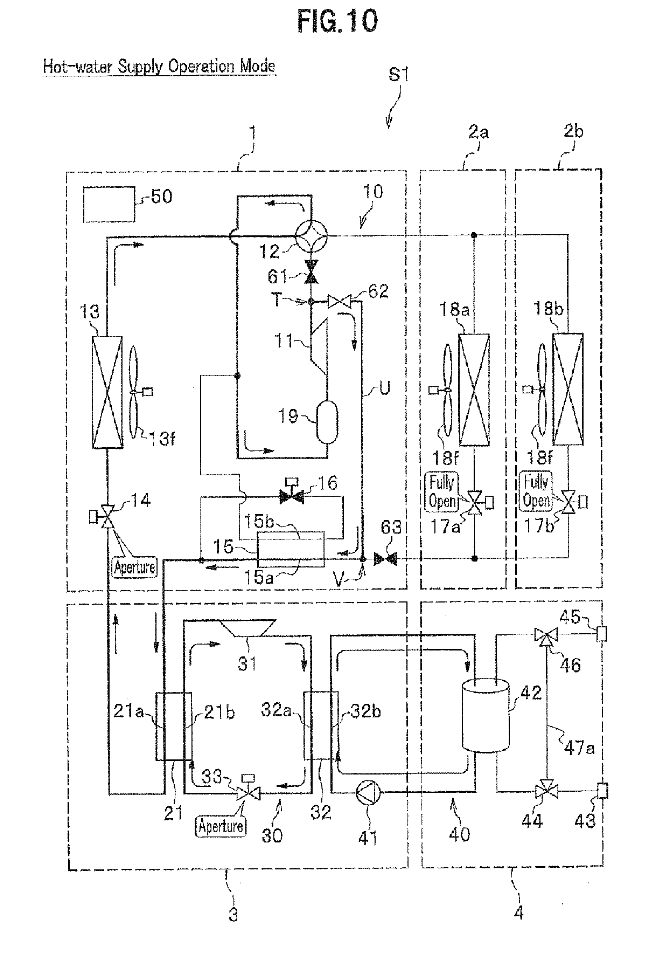

FIG. 10 is a system diagram indicating flows of refrigerants and a heated fluid in a hot-water-supply operation mode in an air-conditioning/hot-water supply system S1 according to the second embodiment of the present invention.

The bypass pipe arrangement U illustrated in FIG. 10 is a pipe arrangement which connects the pipe arrangement connecting the primary-side heat transfer pipe 15a in the inside heat exchanger 15 and the indoor expansion valves 17 and a pipe arrangement arranged on the discharge side of the compressor 11 for air conditioning. One end of the bypass pipe arrangement U is connected (at the point T) to a pipe arrangement connecting the discharge side of the compressor 11 for air conditioning and the two-way valve 61, and the other end of the bypass pipe arrangement U is connected (at the point V) to a pipe arrangement connecting the primary-side heat transfer pipe 15a in the inside heat exchanger 15 and the two-way valve 63.

In the air-conditioning refrigerant circuit 10, the two-way valve 61 is arranged between the discharge side of the compressor 11 for air conditioning and the four-way valve 12, and the two-way valve 62 is arranged at a halfway position in the bypass pipe arrangement U. In addition, the two-way valve 63 is arranged between the primary-side heat transfer pipe 15a in the inside heat exchanger 15 and the indoor expansion valves 17.

That is, the two-way valves 61, 62, and 63 realize the "open-close means" which causes the first refrigerant flowing out of the compressor 11 for air conditioning to flow into the primary-side heat transfer pipe 15a in the inside heat exchanger 15 through the bypass pipe arrangement U in the hot-water-supply operation mode.

The control device 50 controls the switch means (not shown) in the four-way valve 12 so as to position the switch means for the hot-water supply operation. In addition, the control device 50 completely closes the expansion valve 16 for the inside heat exchanger, fully opens the indoor expansion valves 17, and controls the aperture of the outdoor expansion valve 14.

Further, the control device 50 closes the two-way valves 61 and 63, and opens the two-way valve 62. Thus, it is possible to prevent the first refrigerant being delivered from the compressor 11 for air conditioning and having high temperature and high pressure from flowing into the indoor heat exchangers 18.

Furthermore, the control device 50 controls the rotational speeds of the compressor 11 for air conditioning, the compressor 31 for hot-water supply, and the outdoor fan 13f. The indoor fans 18f are stopped by the control device 50 in the hot-water-supply operation mode.

The air-conditioning refrigerant circuit 10 in the hot-water-supply operation mode is explained below. Since the operations of the hot-water-supply refrigerant circuit 30 and the hot-water supply circuit 40 in the hot-water-supply operation mode are similar to the operations in the hot-water-supply operation mode which are explained before, explanations on the operations of the hot-water-supply refrigerant circuit 30 and the hot-water supply circuit 40 in the hot-water-supply operation mode according to the second embodiment are not presented.

The first refrigerant being delivered from the compressor 11 for air conditioning and having high temperature and high pressure passes through the two-way valve and the primary-side heat transfer pipe 15a in the inside heat exchanger 15, and flows into the primary-side heat transfer pipe 21a in the intermediate heat exchanger 21, which functions as a condenser.

The first refrigerant flowing through the primary-side heat transfer pipe 21a and having high temperature and high pressure exchanges heat with the heated fluid flowing through the secondary-side heat transfer pipe 21b in the intermediate heat exchanger 21, so that heat in the first refrigerant flowing through the primary-side heat transfer pipe 21 a is dissipated, and the above first refrigerant comes to have medium temperature and high pressure.

The first refrigerant which flows out of the primary-side heat transfer pipe 21a in the intermediate heat exchanger 21 and has medium temperature and high pressure comes to have low temperature and low pressure by pressure reduction in the outdoor expansion valve 14.

Subsequently, the first refrigerant having low temperature and low pressure flows into the outdoor heat exchanger 13, which functions as an evaporator. The first refrigerant flowing through the outdoor heat exchanger 13 takes (absorbs) heat from the air (outdoor air) sent by the outdoor fan 13f, by heat exchange with the air. Thereafter, the first refrigerant having the absorbed heat returns from the outdoor heat exchanger 13 through the four-way valve 12 and the accumulator 19 to the compressor 11 for air conditioning.

Further, when the air-conditioning/hot-water supply system S1 is operated in the other operation modes (including the cooling operation (normal) mode, the cooling operation (exhaust heat) mode, the heating operation (normal) mode, and the heating operation (exhaust heat) mode), the control device 50 fully opens the two-way valves 61 and 63, and completely closes the two-way valve 62.

Since the control operations in the above modes in the second embodiment are similar to the operations in the first embodiment, explanations on the above cases are not presented.

### <Advantageous Effect>

When the bypass pipe arrangement U and the two-way valves 61, 62, and 63 are arranged as illustrated in FIG. 10, the first refrigerant does not flow into the indoor heat exchangers 18 during hot-water supply operation. Therefore, unnecessary heat exchange does not occur in the indoor heat exchangers 18, so that the heat exchange between the second refrigerant and the high-temperature first refrigerant can be further efficiently performed in the intermediate heat exchanger 21.

### «Variations»

Although the air-conditioning/hot-water supply system according to the present invention is explained by the respective embodiments, the present invention is not limited to the disclosed embodiments, and various modifications and the like can be made.

For example, although the outdoor unit 1, the hot-water supply unit 3, and the hot-water storage tank 4 in each of the embodiments are described as separate units, the present invention is not limited to such arrangements. For example, the above units may be integrated into a single heat pump unit.

In addition, although the case in which the pressure of the first refrigerant is reduced by the expansion valve 16 for the inside heat exchanger (the decompression device) is explained in each of the embodiments, for example, a capillary tube or the like, instead of the expansion valve 16 for the inside heat exchanger, may be used.

Further, although the case in which the two indoor units are arranged is explained in each of the embodiments, the number of indoor units may be one, or three or more. In the case where multiple indoor units are arranged, the multiple indoor units are connected in parallel.

Furthermore, although, in the second embodiment, the two-way valves 61, 62, and 63 are used as the "open-close means" for causing the first refrigerant flowing out of the compressor 11 for air conditioning to flow into the primary-side heat transfer pipe 15a in the inside heat exchanger 15 through the bypass pipe arrangement U, the present invention is not limited to such an arrangement. For example, one or more three-way valves, instead of the two-way valves, may be arranged for realizing the "open-close means".

### List of References

S, S1: Air-conditioning/Hot-water Supply System
1: Outdoor Unit
10: Air-conditioning Refrigerant Circuit
11: Compressor for Air Conditioning
12: Four-way Valve
13: Outdoor Heat Exchanger (Air-conditioning Heat-source Side Heat Exchanger)
14: Outdoor Expansion Valve (First Expansion Valve)
15: Inside Heat Exchanger
16: Expansion Valve for Inside Heat Exchanger (Decompression device)
17a, 17b: Indoor Expansion Valves (Second Expansion Valve)
18a, 18b: Indoor Heat Exchangers (Air-conditioned Side Heat Exchanger)
19: Accumulator
2a, 2b: Indoor Units
21: Intermediate Heat Exchanger
30: Hot-water-supply Refrigerant Circuit
40: Hot-water Supply Circuit
50: Control Device
61, 62, 63: Two-way Valves (Open-close Means)
U: Bypass Pipe Arrangement

## Claims

1. An air-conditioning/hot-water supply system comprising,
a refrigerant circuit for air conditioning in which a first refrigerant circulates, and
a refrigerant circuit for hot-water supply in which a second refrigerant circulates;
**characterized in that**
the refrigerant circuit for air conditioning includes a loop circuit in which a compressor for air conditioning, a four-way valve, an air-conditioning heat-source side heat exchanger, a first expansion valve, an intermediate heat exchanger capable of exchanging heat between the first refrigerant and the second refrigerant, an inside heat exchanger capable of cooling the first refrigerant, a second expansion valve, and an air-conditioned side heat exchanger are connected in order;
the inside heat exchanger includes,
a primary-side heat transfer pipe constituting a portion of the loop circuit, and
a secondary-side heat transfer pipe connected to a branch pipe arrangement which branches off from the loop circuit through a decompression device; and
the decompression device cools the first refrigerant flowing through the primary-side heat transfer pipe, according to an operation mode, by causing pressure reduction of the first refrigerant flowing in from the branch pipe arrangement and delivering the first refrigerant having reduced pressure toward the secondary-side heat transfer pipe.

2. The air-conditioning/hot-water supply system according to claim 1, further comprising a plurality of indoor units each including the second expansion valve and the air-conditioned side heat exchanger, which is connected in series to the second expansion valve, where the plurality of indoor units are connected in parallel.

3. The air-conditioning/hot-water supply system according to either of claims 1 and 2, wherein the decompression device is an expansion valve or a capillary tube.

4. The air-conditioning/hot-water supply system according to claim 3, further comprising,
a bypass pipe arrangement which connects a pipe arrangement connecting the primary-side heat transfer pipe in the inside heat exchanger and the second expansion valve and a pipe arrangement arranged on a discharge side of the compressor for air conditioning, and
an open-close means for causing the first refrigerant flowing out of the compressor for air conditioning to flow into the primary-side heat transfer pipe in the inside heat exchanger through the bypass pipe arrangement in a hot-water-supply operation mode.

## Amended claims

### Amended claims under Art. 19.1 PCT

1. (Amended) An air-conditioning/hot-water supply system comprising,
a refrigerant circuit for air conditioning in which a first refrigerant circulates,
a refrigerant circuit for hot-water supply in which a second refrigerant circulates, and
a control device;
**characterized in that**
the refrigerant circuit for air conditioning includes a loop circuit in which a compressor for air conditioning, a four-way valve, an air-conditioning heat-source side heat exchanger, a first expansion valve, an intermediate heat exchanger capable of exchanging heat between the first refrigerant and the second refrigerant, an inside heat exchanger capable of cooling the first refrigerant, a second expansion valve, and an air-conditioned side heat exchanger are connected in order;
the inside heat exchanger includes,
a primary-side heat transfer pipe constituting a portion of the loop circuit, and
a secondary-side heat transfer pipe connected to a branch pipe arrangement which branches off from the loop circuit through a decompression device;
when a cooling operation is performed, the control device controls the four-way valve such that the air-conditioning heat-source side heat exchanger functions as a condenser and the air-conditioned side heat exchanger functions as an evaporator, and causes the first refrigerant to be cooled in the inside heat exchanger, undergo pressure reduction in the second expansion valve, and flow into the air-conditioned side heat exchanger; and
when a heating operation is performed, the control device controls the four-way valve such that the air-conditioned side heat exchanger functions as a condenser and the air-conditioning heat-source side heat exchanger functions as an evaporator, and causes the first refrigerant to undergo pressure reduction in the second expansion valve and the first expansion valve in succession, and flow into the air-conditioning heat-source side heat exchanger.

2. The air-conditioning/hot-water supply system according to claim 1, further comprising a plurality of indoor units each including the second expansion valve and the air-conditioned side heat exchanger, which is connected in series to the second expansion valve, where the plurality of indoor units are connected in parallel.

3. The air-conditioning/hot-water supply system according to either of claims 1 and 2, wherein the decompression device is an expansion valve or a capillary tube.

4. The air-conditioning/hot-water supply system according to claim 3, further comprising,
a bypass pipe arrangement which connects a pipe arrangement connecting the primary-side heat transfer pipe in the inside heat exchanger and the second expansion valve and a pipe arrangement arranged on a discharge side of the compressor for air conditioning, and
an open-close means for causing the first refrigerant flowing out of the compressor for air conditioning to flow into the primary-side heat transfer pipe in the inside heat exchanger through the bypass pipe arrangement in a hot-water-supply operation mode.

5. (Added) The air-conditioning/hot-water supply system according to claim 1, wherein, in a normal heating operation mode in which a heating operation is performed and a hot-water supply operation is not performed, the control device causes the first refrigerant having a pressure reduced in the second expansion valve to be cooled in the inside heat exchanger, further undergo pressure reduction in the first expansion valve, and flow into the air-conditioning heat-source side heat exchanger.

6. (Added) The air-conditioning/hot-water supply system according to claim 1, wherein, in a heating-operation exhaust heat mode in which exhaust heat occurring in a heating operation is used for a hot-water supply operation, pressure reduction by the decompression device is not performed on the first refrigerant.

Statement under Art. 19.1 PCT

In claim 1, the operations of the control device during the cooling operation are clarified. This amendment is based on the paragraphs 0040 to 0044 and 0047 to 0051 in the description and FIGS. 3 to 5. In addition, the operations of the control device during the heating operation are clarified in claim 1. This amendment is based on the paragraphs 0054 to 0059 and 0064 to 0066 in the description and FIGS. 6 to 9.
None of the mentioned operations is disclosed in any of the cited documents 1 to 4.
The invention of the amended claim 1 has a remarkable advantage that the total operational efficiency of the system can be improved. (See the paragraph 0067.)
The new claim 5 is added. This amendment is based on the paragraphs 0054 to 0059 in the description and FIGS. 6 and 7.
The new claim 6 is added. This amendment is based on the paragraphs 0061 and 0065 in the description and FIGS. 8 and 9.
